(19) Europäisches Patentamt
European Patent Office
Office européen des brevets

(11) **EP 4 070 082 B1**

(12) **EUROPÄISCHE PATENTSCHRIFT**

(45) Veröffentlichungstag und Bekanntmachung des Hinweises auf die Patenterteilung:
**15.11.2023 Patentblatt 2023/46**

(21) Anmeldenummer: **20821128.4**

(22) Anmeldetag: **24.11.2020**

(51) Internationale Patentklassifikation (IPC):
*G01N 21/84* (2006.01) *G06T 7/00* (2017.01)

(52) Gemeinsame Patentklassifikation (CPC):
**G01N 21/8422; G01N 21/8851; G06T 7/0004; G06T 7/521;** G01N 2021/8427; G06T 2207/20056; G06T 2207/20076; G06T 2207/30161

(86) Internationale Anmeldenummer:
**PCT/EP2020/083233**

(87) Internationale Veröffentlichungsnummer:
**WO 2021/110486 (10.06.2021 Gazette 2021/23)**

(54) **VERFAHREN ZUR BEURTEILUNG DER QUALITÄT LACKIERTER HOLZOBERFLÄCHEN**

METHOD FOR ASSESSING THE QUALITY OF VARNISHED WOOD SURFACES

PROCÉDÉ D'ÉVALUATION DE QUALITÉ DE SURFACES DE BOIS VERNIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2019 DE 102019133364**

(43) Veröffentlichungstag der Anmeldung:
**12.10.2022 Patentblatt 2022/41**

(73) Patentinhaber: **Lufthansa Technik AG 22335 Hamburg (DE)**

(72) Erfinder:
• **NOLTE, Mathias Tulsa, OK 74133 (US)**
• **REIFFERSCHEID, Moritz 21483 Basedow (DE)**

(74) Vertreter: **Glawe, Delfs, Moll Partnerschaft mbB von Patent- und Rechtsanwälten Postfach 13 03 91 20103 Hamburg (DE)**

(56) Entgegenhaltungen:
WO-A1-2008/031621 DE-A1-102014 108 789

EP 4 070 082 B1

**Beschreibung**

Gegenstand der vorliegenden Erfindung ist ein Verfahren zur Beurteilung der Qualität lackierter Holzoberflächen.

Holz erfreut sich als Baumaterial aufgrund seines edlen und natürlichen Aussehens beispielsweise im Möbelbau, im Fahrzeuginnenausbau und auch in vielen anderen Bereichen großer Beliebtheit. Die Holzoberfläche wird oftmals lackiert, um diese einerseits zu schützen und andererseits die visuelle Anmutung weiter zu verbessern, beispielsweise durch Erzeugung einer "Hochglanzoptik".

Zur Qualitätsbeurteilung von lackierten Holzoberflächen ist es bekannt, die Lackoberfläche einer individuellen Sichtprüfung zu unterziehen. Problematisch dabei ist allerdings, dass der optische Eindruck, den ein Beobachter von einer glänzenden Lackoberfläche erhält, stets vom einfallenden Licht aus der Umgebung abhängt, welches an der Oberfläche reflektiert wird, wodurch der Beobachter ein Abbild der Umgebung auf die Oberfläche projiziert sieht. Zudem hängt der optische Eindruck stark von der Blickrichtung des Beobachters ab sowie auch von dem Wissen des Beobachters über Gestalt und Reflektivität des untersuchten Objektes. Individuelle Sichtprüfungen führen daher zu subjektiven und somit schlecht vergleichbaren Ergebnissen. Aus der DE 10 2014 108 789 A1 ist ein Verfahren zur Untersuchung von Oberflächen bekannt, bei dem eine topographische Eigenschaft sowie eine optische Eigenschaft eines Bereichs der Oberfläche bestimmt wird, um daraus einen Wert zu ermitteln, der für die optische Eigenschaft charakteristisch ist.

Vor diesem Hintergrund ist es die Aufgabe der vorliegenden Erfindung, ein verbessertes Verfahren zur Beurteilung der Qualität lackierter Holzoberflächen bereitzustellen.

Gelöst wird diese Aufgabe mit einem Verfahren gemäß dem unabhängigen Anspruch. Vorteilhafte Ausführungsformen sind in den Unteransprüchen beschrieben.

Das erfindungsgemäße Verfahren zur Beurteilung der Qualität lackierter Holzoberflächen weist die folgenden Schritte auf:

   a. Erstellen einer Helligkeitskarte der Oberfläche,

   b. Erstellen einer Krümmungskarte der Oberfläche,

   c. Ermitteln einer Kreuzkorrelation von Helligkeitskarte und Krümmungskarte,

   d. Auswertung des Ergebnisses der Kreuzkorrelation zur Ermittlung des auf Lackmängel zurückzuführenden Anteils der Unebenheiten der Oberfläche.

Zunächst werden einige im Rahmen der Erfindung verwendete Begriffe erläutert.

Eine Helligkeitskarte bezeichnet im Rahmen der Erfindung eine Zuordnung von Helligkeitswerten zu einer Mehrzahl von Punkten der zu untersuchenden Oberfläche. Der Oberfläche kann dazu beispielsweise eine x- und eine dazu vorzugsweise orthogonal ausgerichtete y-Richtung zugeordnet werden, wobei die Oberfläche durch eine Mehrzahl von Wertepaaren $(x, y)$ repräsentiert wird und wobei jedem Wertepaar ein Helligkeitswert $H(x, y)$ zugeordnet wird. Die durch die Wertepaare $(x, y)$ repräsentierten Punkte der Oberfläche liegen vorzugsweise in einer Ebene, in die die betrachtete Oberfläche projiziert wird. Die Helligkeitswerte können beispielsweise mit Hilfe einer Kamera mit einem lichtempfindlichen Sensor ermittelt werden. Insbesondere kann der betrachtete Oberflächenabschnitt durch eine Lichtquelle beleuchtet werden, wobei mit Hilfe der Kamera für jedes Wertepaar $(x, y)$ ein Helligkeitswert $H(x, y)$ gemessen und zur Erstellung der Helligkeitskarte verwendet wird. Jedem Wertepaar $(x, y)$ der Oberfläche kann ein entsprechender Bildpunkt der Kamera zugeordnet sein.

Der Begriff Krümmungskarte bezeichnet eine Zuordnung von Krümmungswerten $K(x, y)$ zu einer Mehrzahl von Punkten $(x, y)$ der zu untersuchenden Oberfläche. Bei den Krümmungswerten handelt es sich vorzugweise um die mittlere Krümmung der Oberfläche an dem jeweiligen Punkt. Die mittlere Krümmung ist dabei vorzugsweise durch das arithmetische Mittel der beiden Hauptkrümmungen im jeweiligen Punkt gegeben. Die Krümmungskarte kann auf grundsätzlich bekannte Weise beispielsweise mittels Streifendeflektometrie erzeugt werden. Der Begriff "Streifendeflektometrie" bezeichnet ein Verfahren, bei dem ein Streifenmuster erzeugt und auf eine zu untersuchende lackierte Oberfläche gerichtet wird. Die Reflexion des Streifenmusters an der lackierten Oberfläche wird von einer Kamera erfasst. Auf der zu untersuchenden Oberfläche vorhandene lokale Unebenheiten führen dazu, dass das von der Kamera erfasste Streifenmuster gegenüber dem ursprünglich erzeugten Streifenmuster deformiert ist. Aus den Deformationen kann die Krümmung der Oberfläche bzw. die lokale Ausrichtung der Normalvektoren, welche an einem betrachteten Punkt senkrecht auf der Oberfläche stehen, berechnet werden (siehe z.B. "Li, Wansong; Bothe, Thorsten; von Kopylow, Christoph; Jüptner, Werner: High Resolution 3D Shape Measurement on specular surfaces by fringe reflection. In: Proceedings of SPIE Volume 5457, 2004, S. 411-422").

Vorzugsweise wird für die Erstellung der Helligkeitskarte sowie für die Erstellung der Krümmungskarte dieselbe Kamera verwendet.

Der Begriff Kreuzkorrelation ist gemäß seiner üblichen mathematischen Bedeutung zu verstehen. Die Kreuzkorrelation kann insbesondere die Korrelation der beiden Funktionen H(x, y) und K(x, y) in Abhängigkeit einer Ortsverschiebung (h, k) der Funktionen relativ zueinander in x- bzw. y-Richtung beschreiben. Die Kreuzkorrelation *KK(h, k)* von Helligkeitskarte und Krümmungskarte kann beispielsweise für den Fall, dass Helligkeitskarte und Krümmungskarte durch die beiden diskreten Ortsfunktionen $H(x_i, y_j)$ und $K(x_i, y_j)$ gegeben sind, ermittelt werden gemäß:

$$KK(h, k) = \alpha \sum_{i,j} H(x_i, y_j) \cdot K(x_i + h, y_j + k)$$

Die Indizes i, j bezeichnen dabei die jeweiligen diskreten x-bzw. y-Werte. Die Summen werden für den Fall, dass Helligkeits- und Krümmungskarte jeweils beispielsweise eine Anzahl von n diskreten x-Werten und m diskreten y-Werten aufweisen, gebildet durch eine Doppelsumme, bei der der Index i die Werte 1 bis n und der Index j die Werte 1 bis m annimmt. Der Wert $\alpha$ ist ein Faktor, welcher eine Normierung ermöglicht.

Die Krümmungskarte erlaubt es, eine Aussage über die auf der Lackoberfläche vorhandenen Krümmungen und somit über vorhandene Unebenheiten zu treffen. Dazu können beispielsweise die gemessenen Krümmungswerte über die gesamte betrachtete Oberfläche gemittelt werden und eine Standardabweichung berechnet werden. Eine große Standardabweichung ergibt sich dann, wenn an vielen Stellen der Oberfläche große Abweichungen von der mittleren Krümmung vorliegen. Eine große Standardabweichung geht daher grundsätzlich mit einer schlechten Lackqualität einher.

Allerdings wurde im Rahmen der Erfindung erkannt, dass die Krümmungskarte und insbesondere die Standardabweichung in vielen Fällen keine zufriedenstellende Qualitätsbeurteilung zulässt. Insbesondere wurde erkannt, dass die natürliche Maserung von Holzoberflächen häufig zu Unebenheiten in der Oberfläche führt, welche dem Verlauf der Maserung folgen. Die Maserung des Holzes wird nämlich durch Poren gebildet, welche sich im Laufe der Zeit zusammenziehen oder vergrößern können. Dadurch kann es zu einer Grabenbildung oder auch zu einer Aufwölbung des Lacks im Bereich der Poren kommen. Solche Lackmängel werden nachfolgend als "Lackeinfall" bezeichnet. Im Rahmen der Erfindung wurde weiterhin erkannt, dass der optische Eindruck durch einen solchen entlang der Maserung verlaufenden Lackeinfall im Vergleich zu anderen Lackmängeln weniger stark beeinträchtigt wird. Vielmehr fällt ein Lackeinfall, welcher sich entlang der Maserung erstreckt, weniger stark ins Auge und wird von einem Beobachter in vielen Fällen als wenig störend empfunden. Ein sich entlang einer Maserung erstreckender Lackeinfall wird daher im Rahmen der Erfindung nicht zu den "Lackmängeln" gezählt. Lackmängel bezeichnen also im Rahmen der Erfindung Unebenheiten und sonstige Fehlstellen in der lackierten Holzoberfläche, welche keinen Lackeinfall im oben genannten Sinne darstellen.

Da die Maserung des Holzes auf der Helligkeitskarte als Helligkeitsverlauf erkennbar ist (die die Maserung bildenden Poren sind üblicherweise heller oder dunkler als die jeweilige Umgebung), kann im Rahmen der Erfindung durch die Ermittlung der Kreuzkorrelation von Helligkeitskarte und Krümmungskarte auf einfache Weise festgestellt werden, ob die Unebenheiten der Oberfläche auf die Maserung des Holzes zurückzuführen sind oder nicht. Es kann auf diese Weise der Anteil der Unebenheiten der Oberfläche ermittelt werden, welcher auf Lackmängel zurückzuführen ist. Wird beispielsweise eine große Kreuzkorrelation gefunden, bedeutet dies, dass ein großer Anteil der Unebenheiten auf die Maserung zurückzuführen ist.

Das erfindungsgemäße Verfahren ermöglicht somit aufgrund der Berücksichtigung der Kreuzkorrelation ein Urteil darüber ob gemessene Unebenheiten durch die Maserung verursacht sind - und somit tendenziell eher toleriert werden können - oder ob es sich um tatsächliche störende Lackmängel handelt. Weiterhin kann das erfindungsgemäße Verfahren automatisiert durchgeführt werden und ist zudem unabhängig von der subjektiven Einschätzung eines Beobachters. Es kann so auf einfache und wirtschaftliche Weise sichergestellt werden, dass Reparaturmaßnahmen erst dann vorgenommen werden, wenn tatsächlich ein objektiv festgestellter Lackmangel besteht.

In einer bevorzugten Ausführungsform wird die gemessene Helligkeitsverteilung zur Erstellung der Helligkeitskarte normiert. Dies hat den Vorteil einer besseren Vergleichbarkeit zwischen verschiedenen Oberflächen. Zudem kann ausgeschlossen werden, dass Unterschiede in der Beleuchtungsintensität zu unterschiedlichen Ergebnissen bei der Beurteilung der Lackqualität führen.

Vorzugsweise umfasst die Normierung folgende Schritte:

a. Division der gemessenen Helligkeitsverteilung durch eine tiefpassgefilterte Version ihrer selbst,

b. Subtraktion des Mittelwerts der Helligkeit vom Ergebnis des Schritts a.,

c. Division des Ergebnisses des Schritts b. Durch die Standardabweichung der Helligkeit.

Dabei dient der Schritt a. dem Zweck, lokal unterschiedliche Helligkeiten und Kontraste zu normieren, so dass insbesondere solche Helligkeitskarten, welche von Oberflächen verschiedener Holzsorten stammen, bezüglich Helligkeit und Kontrast aneinander angeglichen werden. Zudem liegt die mittlere Helligkeit aufgrund der Division gemäß Schritt a) fast genau bei Eins. Durch die Subtraktion des Mittelwerts sowie die Division durch die Standardabweichung wird eine Helligkeitskarte erzeugt, deren Mittelwert etwa bei Null liegt und deren Standardabweichung etwa bei Eins liegt, so dass Oberflächen verschiedener Holzsorten optimal miteinander vergleichbar sind. Zudem wird dadurch die nachfolgende Ermittlung der Kreuzkorrelation erleichtert.

In einer bevorzugten Ausführungsform umfasst das Ermitteln einer Kreuzkorrelation von Helligkeitskarte und Krümmungskarte die folgenden Schritte:

a. Durchführung einer Fouriertransformation der Helligkeitskarte in den Frequenzraum,

b. Durchführung einer Fouriertransformation der Krümmungskarte in den Frequenzraum,

c. Multiplikation der beiden Fouriertransformierten,

d. inverse Fouriertransformation des Ergebnisses der Multiplikation in Schritt c. in den Ortsraum.

Die inverse Fouriertransformation stellt in diesem Fall die Kreuzkorrelation dar. Es hat sich gezeigt, dass die Fouriertransformierten der Helligkeits- und Krümmungskarte leicht handhabbar sind und die Ermittlung der Kreuzkorrelation so vereinfacht wird. Insbesondere kann eine sogenannte "schnelle" Fouriertransformation durchgeführt werden.

In einer bevorzugten Ausführungsform ist vorgesehen, dass die Auswertung des Ergebnisses der Kreuzkorrelation zur Ermittlung des auf Lackmängel zurückzuführenden Anteils der Unebenheiten der Oberfläche durch Ermittlung des Absolutwertes der Kreuzkorrelation in ihrem Extrempunkt erfolgt. Bei dem Extrempunk kann es sich um ein Maximum oder um ein Minimum handeln, da die Maserung auf der Helligkeitskarte entweder hell oder dunkel erscheinen kann. Zudem kann der Lackeinfall im Bereich einer Maserung wie oben erläutert durch eine Wölbung oder durch einen Graben gebildet werden.

Da die Helligkeitskarte, wie oben erläutert, vorzugsweise bereits normiert ist, ist für die genannte Auswertung keine weitere Normierung der Kreuzkorrelation erforderlich. Bevorzugt erfolgt insbesondere keine Normierung der Krümmungsverteilung bzw. der Fouriertransformierten der Krümmungsverteilung. Dies hat den Vorteil, dass die Absolutwerte der Kreuzkorrelation im Extrempunkt eine absolute Aussage über die Ausprägung des durch Maserung verursachten Lackeinfalls ermöglichen, und somit ein unmittelbarer Vergleich für verschiedene betrachtete Lackoberflächen vorgenommen werden kann. Allerdings kann vorgesehen sein, dass der Absolutwert der Kreuzkorrelation durch das geometrische Mittel aus der Breite und Höhe der Krümmungskarte des betrachteten Oberflächenbereichs geteilt wird, um so eine Normierung bezüglich der Bildgröße (also der Größe der Krümmungskarte) zu erreichen. Wenn diese Anpassung an die Bildgröße nicht durchgeführt wird, hängt der Absolutwert der Kreuzkorrelation von dieser Bildgröße ab, was aus Gründen der Vergleichbarkeit unerwünscht ist.

In einer vorteilhaften Ausführungsform kann vorgesehen sein, dass eine Standardabweichung der Krümmungskarte ermittelt wird, wobei die Standardabweichung als weiterer Indikator zur Beurteilung der Lackqualität verwendet wird. Vorzugsweise ist dabei vorgesehen, dass die Krümmungskarte zunächst mittelwertbereinigt wird. Die Mittelwertbereinigung ist insbesondere dann erforderlich, wenn die zu beurteilende Oberfläche eine global gekrümmte Form aufweist, also insbesondere nicht durch eine Planfläche gebildet ist. In diesem Fall folgt die Krümmungskarte natürlich dem globalen Krümmungsverlauf der Oberfläche. Die mittelwertbereinigte Krümmungskarte kann beispielsweise erhalten werden, indem eine tiefpassgefilterte Version der Krümmungskarte ermittelt und von der Krümmungskarte subtrahiert wird. Die durch die globale Form der untersuchten Fläche verursachten niederfrequenten Krümmungsänderungen werden auf diese Weise aus der Krümmungskarte entfernt (sind also in den mittelwertbereinigten Krümmungskarte nicht mehr vorhanden) und nur die höherfrequenten auf Lackunebenheiten zurückzuführenden Krümmungsänderungen verbleiben. Eine große Standardabweichung der mittelwertbereinigten Krümmungskarte ist üblicherweise ein Indikator für eine schlechte Lackqualität.

Weiterhin kann in einer bevorzugten Ausführungsform ein Krümmungsschwellwert festgelegt und die Anzahl und/oder der Anteil der Punkte der Krümmungskarte ermittelt werden, welche den Krümmungsschwellwert überschreiten, wobei die Anzahl und/oder der Anteil der den Krümmungsschwellwert überschreitenden Punkte der Krümmungskarte als weiterer Indikator zur Beurteilung der Lackqualität verwendet wird. Wenn die gemessene Krümmung an einem Punkt der Krümmungskarte den Schwellwert überschreitet, kann von einem Lackfehler ausgegangen werden. Die Anzahl der den Schwellwert überschreitenden Punkte ist somit ebenfalls ein aussagekräftiger Indikator für die Lackqualität. Vorzugsweise wird die Ermittlung der Anzahl und/oder der Anteil der den Schwellwert überschreitenden Punkte an einer mittelwertbereinigten Krümmungskarte durchgeführt. Dadurch kann auch hier vermieden werden, dass der globale Krümmungsverlauf einer zu untersuchenden Fläche einen Einfluss auf die Auswertung ausübt.

Eine bevorzugte Ausführungsform der Erfindung wird nachfolgend unter Bezugnahme auf die beigefügten Zeichnungen beispielhaft erläutert. Es zeigen:

Figur 1:    (a): eine im Rahmen des erfindungsgemäßen Verfahrens verwendete Helligkeitskarte, (b): eine durch eine Tiefpassfilterung erzeugte Helligkeitskarte, und (c): eine normierte Helligkeitskarte;

Figur 2:    eine im Rahmen des erfindungsgemäßen Verfahrens verwendete Krümmungskarte;

Figur 3:    (a): eine Fouriertransformierte der normierten Helligkeitskarte der Figur 1(c), (b): eine Fouriertransformierte der Krümmungskarte der Figur 2, (c): eine Multiplikation der Fouriertransformierten aus (a) und

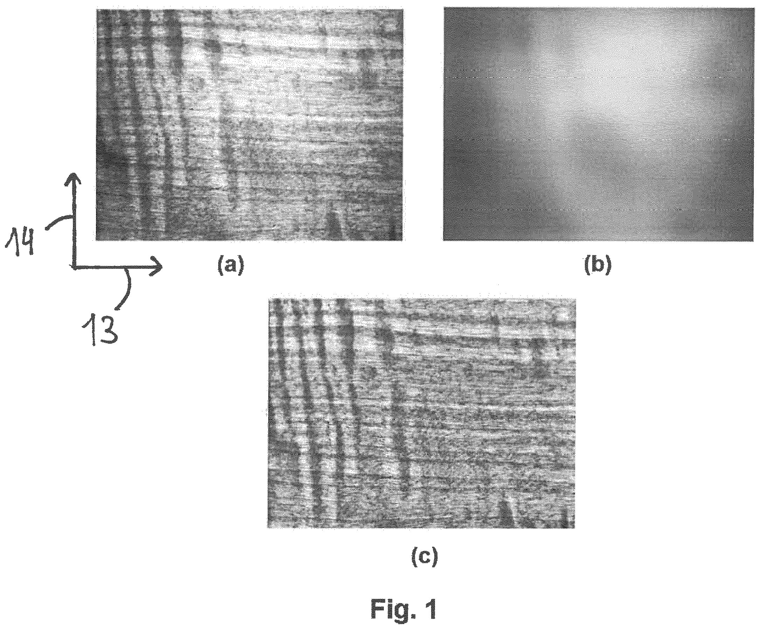

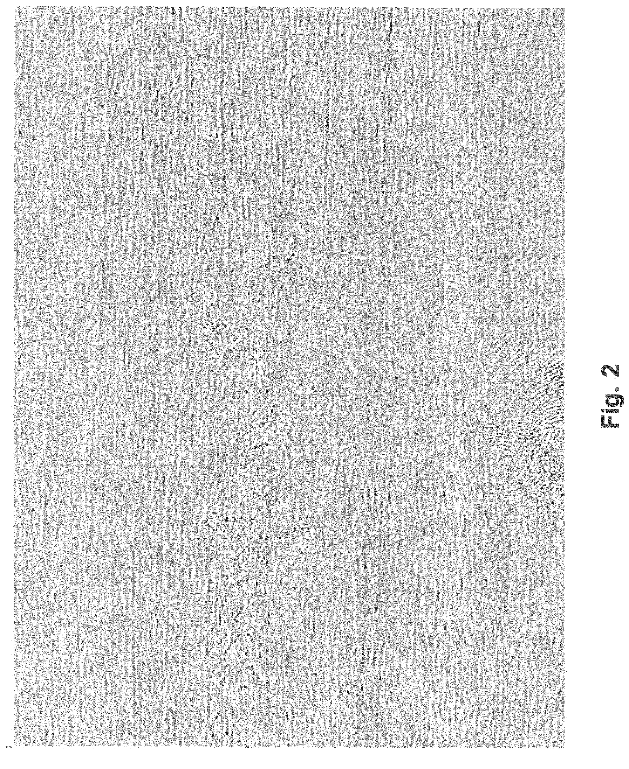

(b), (d):    eine Kreuzkorrelation der Helligkeitskarte der Figur 1(c) und der Krümmungskarte der Figur 2.

Figur 1 zeigt mehrere im Rahmen des erfindungsgemäßen Verfahrens verwendete Helligkeitskarten eines zu untersuchenden Abschnitts einer lackierten Holzoberfläche. Die Helligkeitskarten sind jeweils als Grauwertdiagramme ausgebildet und weisen eine Ausdehnung in x-Richtung 13 sowie eine Ausdehnung in y-Richtung 14 auf. Die Helligkeitskarten weisen eine Vielzahl von Bildpunkten auf, wobei jedem Bildpunkt ein Grauwert zugeordnet ist, welcher die jeweilige Helligkeit repräsentiert.

Zur Erzeugung der in Figur 1(a) gezeigten Helligkeitskarte wurde der von der Helligkeitskarte repräsentierte Oberflächenabschnitt durch eine nicht gezeigte Lichtquelle beleuchtet und von einer nicht gezeigten Kamera erfasst.

Figur 1(b) zeigt eine tiefpassgefilterte Version der in Figur 1(a) gezeigten Helligkeitskarte. Durch den Tiefpassfilter werden Helligkeitswechsel mit hoher Frequenz herausgefiltert, so dass sich die Helligkeit in Figur 1(b) im Vergleich zu Figur 1(a) deutlich langsamer ändert, wenn man die jeweilige Karte entlang einer gedachten Linie "verfolgt".

Figur 1(c) zeigt eine Helligkeitskarte, bei der sich die jeweilige Helligkeit durch eine Division der in Figur 1(a) gezeigten Helligkeitsverteilung durch die in Figur 1(b) gezeigte Helligkeitsverteilung ergibt. Dies bedeutet, dass für jeden durch ein Wertepaar (x, y) gegebenen Bildpunkt ein Quotient aus den jeweiligen Helligkeitswerten gebildet wird. Aufgrund dieser Normierung werden die Helligkeitskarten verschiedener Holztypen in Bezug auf ihren Kontrast sowie ihre Helligkeit aneinander angeglichen, so dass eine bessere Vergleichbarkeit besteht.

Figur 2 zeigt eine mittels Streifendeflektometrie gewonnene Krümmungskarte des betrachteten Abschnitts der lackierten Holzoberfläche. Auch bei der Krümmungskarte handelt es sich um ein Grauwertdiagramm, bei der der jeweilige Grauwert die Krümmung am jeweiligen Bildpunkt repräsentiert. Zur Erzeugung der Krümmungskarte wurde ein Streifenmuster auf den betrachteten Abschnitt projiziert und die Reflexion des Streifenmusters durch die nicht gezeigte Kamera erfasst. Auf hier nicht näher erläuterte und grundsätzlich bekannte Weise wurde anhand des von der Kamera erfassten deformierten Streifenbildes für jeden Bildpunkt (x, y) eine mittlere Krümmung berechnet, welche in Figur 2 durch einen Grauwert dargestellt ist. Die Anzahl der Bildpunkte der Krümmungskarte stimmt mit der Anzahl der Bildpunkte (x, y) der Helligkeitskarte überein, zudem wird zur Erstellung von Helligkeitskarte und Krümmungskarte derselbe Abschnitt der lackierten Holzoberfläche betrachtet.

Im Unterschied zur Helligkeitskarte ist die Krümmungskarte nicht normiert. Dies ermöglicht bei der späteren Auswertung der Kreuzkorrelation eine Aussage über die absolute Ausprägung des entlang einer Maserung verlaufenden Lackeinfalls und somit einen unmittelbaren Vergleich zwischen verschiedenen lackierten Holzoberflächen.

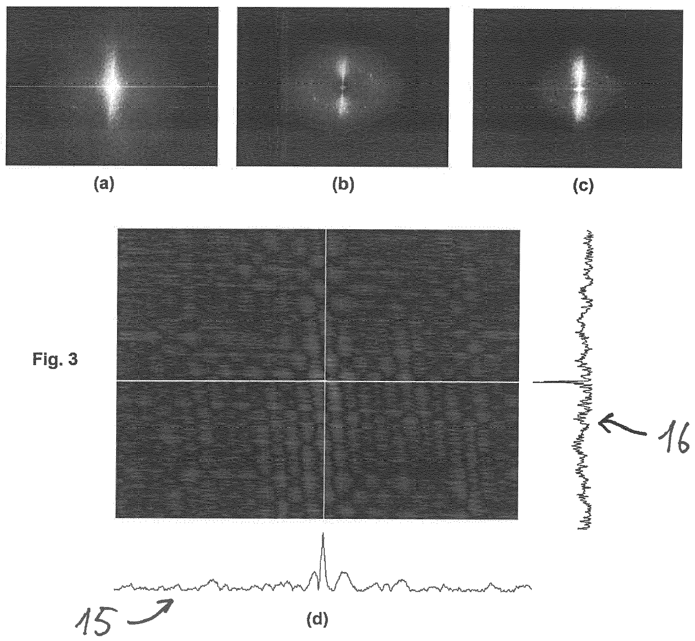

Figur 3(a) zeigt die Fouriertransformierte der normierten Helligkeitskarte der Figur 1(c). Die Ausprägung der jeweiligen Frequenzen ist in der Figur 1(c) durch einen Grauwert des jeweiligen Bildpunkts dargestellt. Figur 3(b) zeigt eine Fouriertransformierte der Krümmungskarte der Figur 2. Die Ausprägung der jeweiligen Frequenzen ist in der Figur 3 (b) ebenfalls durch einen Grauwert des jeweiligen Bildpunkts dargestellt. Figur 3(c) zeigt eine Multiplikation der Fouriertransformierten der Figuren 3(a) und 3(b).

Schließlich zeigt Figur 3(d) ein Grauwertdiagramm einer inversen Fouriertransformation der in Figur 3(c) gezeigten Multiplikation der Fouriertransformierten. Die inverse Fouriertransformation der Figur 3(d) stellt die Kreuzkorrelation der Helligkeitskarte der Figur 1(c) und der Krümmungskarte der Figur 2 dar, wobei außerdem eine Normierung bezüglich der Höhe und Breite des betrachteten Bildes stattgefunden hat.

Der erhaltene Betrag der Kreuzkorrelation für verschiedene Ortsverschiebungen in x- und y-Richtung ist in Figur 3(d) durch einen Grauwert des jeweiligen Bildpunkts dargestellt. Unterhalb des Grauwertdiagramms der Figur 3(d) ist ein Graph 15 dargestellt, welcher die Kreuzkorrelation in Abhängigkeit der Verschiebung in x-Richtung zeigt, wobei die Verschiebung in y-Richtung Null gesetzt ist. Rechts vom Grauwertdiagramm der Figur 3(d) ist ein Graph 16 gezeigt, welcher die Kreuzkorrelation in Abhängigkeit der Verschiebung in y-Richtung zeigt, wobei die Verschiebung in x-Richtung Null gesetzt ist. Die Lage der beiden Graphen im Grauwertdiagramm ist durch eine horizontale bzw. durch eine vertikale Linie angedeutet.

Anhand der Graphen 15 und 16 ist deutlich ein Maximum der Kreuzkorrelation bei einer Verschiebung von (0, 0) zu erkennen. Anhand des Absolutwertes der Kreuzkorrelation im Maximum (0, 0) kann eine Aussage darüber getroffen werden, welcher Anteil der durch die Krümmungskarte ermittelten Unebenheiten auf störende Lackmängel (Kratzer, Lackfehlstellen) zurückzuführen ist, und welcher Anteil auf die vorhandene Maserung zurückzuführen ist. Auf diese Weise kann die Auswertung auf objektive Weise automatisiert durchgeführt werden.

Neben der wie oben beschrieben ermittelten Kreuzkorrelation können weitere Maßzahlen zur Beurteilung der Lackqualität herangezogen werden. Insbesondere kann anhand der Krümmungskarte die Standardabweichung der Krümmung als Maßzahl verwendet werden. Zudem kann eine weitere Maßzahl festgelegt werden, welche sich aus der Anzahl derjenigen Pixel ergibt, deren Krümmung einen festgelegten Krümmungsschwellwert überschreitet. Für die Ermittlung der vorgenannten Maßzahlen wird die Krümmungskarte vorzugsweise, wie oben bereits erläutert, mittelwertbereinigt, um einen unerwünschten Einfluss der globalen Krümmung der zu untersuchenden Oberfläche auf die Maßzahlen zu vermeiden.

Den Maßzahlen kann eine Gewichtung beigemessen werden, wobei anhand der Maßzahlen unter Berücksichtigung der jeweiligen Gewichtung eine globale Maßzahl berechnet werden kann. Das erfindungsgemäße Verfahren ermöglicht auf diese Weise eine objektive und automatisierbare Beurteilung der Qualität lackierter Holzoberflächen.

**Patentansprüche**

1. Verfahren zur Beurteilung der Qualität lackierter Holzoberflächen, **gekennzeichnet durch** folgende Schritte:

   a. Erstellen einer Helligkeitskarte der Oberfläche,
   b. Erstellen einer Krümmungskarte der Oberfläche,
   c. Ermitteln einer Kreuzkorrelation von Helligkeitskarte und Krümmungskarte,
   d. Auswertung des Ergebnisses der Kreuzkorrelation zur Ermittlung des auf Lackmängel zurückzuführenden Anteils der Unebenheiten der Oberfläche.

2. Verfahren nach Anspruch 1, **dadurch gekennzeichnet, dass** zur Erstellung der Helligkeitskarte die gemessene Helligkeitsverteilung normiert wird.

3. Verfahren nach Anspruch 2, **dadurch gekennzeichnet, dass** die Normierung folgende Schritte umfasst:

   a. Division der gemessenen Helligkeitsverteilung durch eine tiefpassgefilterte Version ihrer selbst,
   b. Subtraktion des Mittelwerts der Helligkeit vom Ergebnis des Schritts a.,
   c. Division des Ergebnisses des Schritts b. Durch die Standardabweichung der Helligkeit.

4. Verfahren nach einem der Ansprüche 1 bis 3, **dadurch gekennzeichnet, dass** das Erstellen einer Krümmungskarte der Oberfläche mittels Streifendeflektometrie erfolgt.

5. Verfahren nach einem der Ansprüche 1 bis 4, **dadurch gekennzeichnet, dass** das Durchführen einer Kreuzkorrelation von Helligkeitskarte und Krümmungskarte folgende Schritte umfasst:

   a. Durchführung einer Fouriertransformation der Helligkeitskarte in den Frequenzraum,
   b. Durchführung einer Fouriertransformation der Krümmungskarte in den Frequenzraum,
   c. Multiplikation der beiden Fouriertransformierten,
   d. inverse Fouriertransformation des Ergebnisses der Multiplikation in Schritt c. in den Ortsraum.

6. Verfahren nach einem der Ansprüche 1 bis 5, **dadurch gekennzeichnet, dass** die Auswertung des Ergebnisses der Kreuzkorrelation zur Ermittlung des auf Lackmängel zurückzuführenden Anteils der Unebenheiten der Oberfläche durch Ermittlung des Absolutwerts der Kreuzkorrelation in ihrem Extrempunkt erfolgt.

7. Verfahren gemäß einem der Ansprüche 1 bis 6, bei dem eine Standardabweichung der Krümmungskarte als weiterer Indikator zur Beurteilung der Lackqualität verwendet wird.

8. Verfahren gemäß einem der Ansprüche 1 bis 7, bei dem ein Krümmungsschwellwert festgelegt und die Anzahl und/oder der Anteil der Punkte der Krümmungskarte ermittelt wird, welche den Krümmungsschwellwert überschreiten, wobei die Anzahl und/oder der Anteil der den Krümmungsschwellwert überschreitenden Punkte der Krümmungskarte als weiterer Indikator zur Beurteilung der Lackqualität verwendet wird.

9. Verfahren gemäß einem der Ansprüche 7 oder 8, bei dem der Ermittlung des jeweiligen Indikators eine mittelwertbereinigte Krümmungskarte zugrunde gelegt wird.

## Claims

1. Method for assessing the quality of varnished wood surfaces, **characterized by** the following steps:

   a. creating a brightness map of the surface,
   b. creating a curvature map of the surface,
   c. ascertaining a cross-correlation of brightness map and curvature map,
   d. evaluating the result of the cross-correlation to ascertain the proportion of the irregularities of the surface to be attributed to varnish flaws.

2. Method according to Claim 1, **characterized in that** the measured brightness distribution is scaled to create the brightness map.

3. Method according to Claim 2, **characterized in that** the scaling comprises the following steps:

   a. dividing the measured brightness distribution by a low-pass-filtered version of itself,
   b. subtracting the mean value of the brightness from the result of step a.,
   c. dividing the result of step b. by the standard deviation of the brightness.

4. Method according to any one of Claims 1 to 3, **characterized in that** the creation of a curvature map of the surface is carried out by means of strip deflectometry.

5. Method according to any one of Claims 1 to 4, **characterized in that** carrying out a cross-correlation of brightness map and curvature map comprises the following steps:

   a. carrying out a Fourier transform of the brightness map in the frequency space,
   b. carrying out a Fourier transform of the curvature map in the frequency space,
   c. multiplying the two Fourier transforms,
   d. inverse Fourier transform of the result of the multiplication in step c. in the location space.

6. Method according to any one of Claims 1 to 5, **characterized in that** the evaluation of the result of the cross-correlation to ascertain the proportion of the irregularities of the surface to be attributed to varnish flaws is carried out by ascertaining the absolute value of the cross-correlation in its extreme point.

7. Method according to any one of Claims 1 to 6, in which a standard deviation of the curvature map is used as a further indicator for assessing the varnish quality.

8. Method according to any one of Claims 1 to 7, in which a curvature threshold value is defined and the number and/or the proportion of the points of the curvature map which exceed the curvature threshold value is ascertained, wherein the number and/or the proportion of the points of the curvature map exceeding the curvature threshold value is used as a further indicator for assessing the varnish quality.

9. Method according to one of Claims 7 or 8, in which the ascertainment of the respective indicator is based on a mean value-filtered curvature map.

## Revendications

1. Procédé d'évaluation de la qualité de surfaces en bois vernies, **caractérisé par** les étapes suivantes :

   a. création d'une carte de luminosité de la surface,
   b. création d'une carte de courbure de la surface,
   c. détermination d'une corrélation croisée de la carte de luminosité et de la carte de courbure,
   d. interprétation du résultat de la corrélation croisée en vue de déterminer la proportion des irrégularités de la surface à ramener à un manque de vernis.

**2.** Procédé selon la revendication 1, **caractérisé en ce qu'**en vue de créer la carte de luminosité, la distribution mesurée de la luminosité est normalisée.

**3.** Procédé selon la revendication 2, **caractérisé en ce que** la normalisation comprend les étapes suivantes :

a. division de la distribution mesurée de la luminosité par une version filtrée passe-bas d'elle-même,
b. soustraction de la valeur moyenne de la luminosité du résultat de l'étape a.,
c. division du résultat de l'étape b. par l'écart-type de la luminosité.

**4.** Procédé selon l'une des revendications 1 à 3, **caractérisé en ce que** la création d'une carte de courbure de la surface est effectuée au moyen d'une déflectométrie par bandes.

**5.** Procédé selon l'une des revendications 1 à 4, **caractérisé en ce que** la réalisation d'une corrélation croisée de la carte de luminosité et de la carte de courbure comprend les étapes suivantes :

a. réalisation d'une transformée de Fourier de la carte de luminosité dans l'espace fréquentiel,
b. réalisation d'une transformée de Fourier de la carte de courbure dans l'espace fréquentiel,
c. multiplication des deux transformées de Fourier,
d. transformée de Fourier inverse du résultat de la multiplication à l'étape c. dans l'espace local.

**6.** Procédé selon l'une des revendications 1 à 5, **caractérisé en ce que** l'interprétation du résultat de la corrélation croisée en vue de déterminer la proportion des irrégularités de la surface à ramener à un manque de vernis est effectuée par la détermination de la valeur absolue de la corrélation croisée dans son point extrême.

**7.** Procédé selon l'une des revendications 1 à 6, avec lequel un écart-type de la carte de courbure est utilisé comme indicateur supplémentaire pour l'évaluation de la qualité du vernis.

**8.** Procédé selon l'une des revendications 1 à 7, avec lequel une valeur de seuil de courbure est spécifiée et le nombre et/ou la part des points de la carte de courbure qui dépassent la valeur de seuil de courbure est déterminé, le nombre et/ou la part des points de la carte de courbure qui dépassent la valeur de seuil de courbure étant utilisé comme indicateur supplémentaire pour l'évaluation de la qualité du vernis.

**9.** Procédé selon l'une des revendications 7 ou 8, avec lequel une carte de courbure corrigée des valeurs moyennes est utilisée comme base de la détermination de l'indicateur respectif.

(a)

(b)

(c)

Fig. 1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014108789 A1

**In der Beschreibung aufgeführte Nicht-Patentliteratur**

- **LI, WANSONG ; BOTHE, THORSTEN ; VON KO-PYLOW, CHRISTOPH ; JÜPTNER, WERNER.** High Resolution 3D Shape Measurement on specular surfaces by fringe reflection. *Proceedings of SPIE,* 2004, vol. 5457, 411-422